**Europäisches Patentamt**

**European Patent Office**

**Office européen des brevets**

(19)

(11) Veröffentlichungsnummer: **0 301 125**
**A1**

(12) **EUROPÄISCHE PATENTANMELDUNG**

(21) Anmeldenummer: 87111057.3

(22) Anmeldetag: 30.07.87

(51) Int. Cl.4: **G02B 27/14 , G01C 19/64**

(43) Veröffentlichungstag der Anmeldung:
**01.02.89 Patentblatt 89/05**

(84) Benannte Vertragsstaaten:
**CH DE FR GB IT LI NL SE**

(71) Anmelder: **LITEF GmbH**
**Lörracher Strasse 18**
**D-7800 Freiburg/Br.(DE)**

(72) Erfinder: **Büschelberger, Hans-J., Dipl.-Phys.**
**Taradumweg 95**
**D-7815 Kirchzarten(DE)**

(74) Vertreter: **Patentanwälte TER MEER - MÜLLER**
**- STEINMEISTER**
**Mauerkircherstrasse 45**
**D-8000 München 80(DE)**

(54) Vorrichtung zum Überlagerung zweier Lichtstrahlen.

(57) Die für einen Laser-Ringresonator geeignete Vorrichtung zur Überlagerung zweier Lichtstrahlen, die unter einem Divergenzwinkel zur Interferenz gelangen und an einem Beobachtungsort (13) ein Interferenzstreifenmuster bilden, besteht aus zwei an einer gemeinsamen inneren Verbindungsfläche miteinander verkitteter Prismenteile (7, 7'), die an der Basis einen geringfügig unterschiedlichen Basiswinkel (8 bzw. 8') aufweisen. Ein Teilbereich der inneren Verbindungsfläche zwischen den beiden Teilprismen (7, 7') ist mit einer teildurchlässigen Verspiegelung (12) versehen. Eine nicht totalreflektierende Teilbeschichtung (10, 10') an beiden Außenflächen der Prismenteile (7, 7') weist eine größere Brechzahl (n) als das innere Medium der Prismenteile (7, 7') auf und bedeckt Bereiche der möglichen ersten Lichtauftreffpunkte der von festgelegten Lichteintrittspunkten an der Basis aus die Teilprismen durchsetzenden Lichtstrahlen. Die beiden miteinander verkitteten Teilprismen (7, 7') sind basisseitig mit dem Glassubstrat des zur Lichtauskopplung bestimmten Spiegels (4) verbunden.

Mit der Lichtstrahl-Überlagerungsvorrichtung werden unterschiedliche Wegstrecken der beiden Lichtstrahlen (l, 2) und damit die das Meßergebnis verfälschenden Folgen von temperaturbedingten unterschiedlichen Phasenverschiebungen einerseits sowie Oberflächeneffekte mit der Folge einer unerwünschten Frequenzverschiebung andererseits

vermieden. Da sowohl die Information der Frequenzverschiebung als auch die Intensitätsinformation an den beiden Prismenteilen (7, 7') gewonnen werden können, kann ein weiterer teiltransmissiver Spiegel erübrigt werden und die Gesamtverluste des Ringresonators werden geringer bei deutlich besserer Güte.

F i g. 2

BAD ORIGINAL

## Vorrichtung zur Überlagerung zweier Lichtstrahlen

Die Erfindung betrifft eine Vorrichtung zur Überlagerung zweier Lichtstrahlen, die unter einem Divergenzwinkel zur Interferenz gelangen und an einem Beobachtungsort ein Interferenzstreifenmuster bilden. Diese Lichtstrahlen-Überlagerungsvorrichtung eignet sich besonders als Teil eines Lichtauskoppelelements bei einem Laser-Ringresonator.

In einem Laser-Ringresonator ("Ringresonator" im folgenden), der drei oder mehr Spiegel aufweist, können sich zwei entgegengesetzt umlaufende Lichtwellen oder Lichtstrahlen in einem geschlossenen Lichtweg ausbreiten. Soll der durch einen nichtreziproken Effekt hervorgerufene Frequenzunterschied zwischen den beiden Lichtstrahlen gemessen werden, so müssen die Strahlen aus dem Ringresonator ausgekoppelt werden. Ein Frequenzunterschied zwischen den Lichtwellen läßt sich dadurch beobachten, daß beide Strahlen zur Interferenz gebracht werden. Ein von außen auf den Ringresonator einwirkender Effekt, welcher eine Frequenzverschiebung der beiden Lichtquellen zueinander hervorruft, kann durch Beobachtung des Interferenzsignals nachgewiesen werden.

Die Fig. I der beigefügten Zeichnungen zeigt den Prinzipaufbau eines bekannten Laser-Ringresonators mit beispielsweise vier Spiegeln A, B, C und D. Der Lichtweg der beiden entgegengesetzt umlaufenden Lichtwellen ist durch den Bezugshinweis LW angedeutet. Zwei der Spiegel, beispielsweise die Spiegel A und B, sind teildurchlässig. Am Substrat des Spiegels B ist ein Prisma I angesetzt, das beispielsweise mit zwei lichtempfindlichen Detektoren G und H bestückt ist, die zur Messung der Lichtintensität der beiden Lichtwellen dienen, um einen konstanten Lichtintensitätspegel aufrechterhalten zu können. Am teiltransmissiven Spiegel A erfolgt die Auskopplung zur Messung der Frequenzverschiebung. Das Substrat des Spiegels A ist außenseitig mit einem Überlagerungsprisma E bestückt, an welches ein Photodetektor F zur Abtastung des aufgrund der Überlagerung der entgegengesetzt umlaufenden Lichtwellen entstehenden Interferenzmusters angesetzt ist.

Wie dargestellt, wird zur Strahlüberlagerung gewöhnlich ein unsymmetrisches Prisma E verwendet, welches einen Dachwinkel aufweist, der um einen geringen Betrag von 90° abweicht. Durch die Form bedingt, legen die zu überlagernden Strahlen innerhalb des Prismas unterschiedliche Wegstrecken zurück. Dies führt bei einer Änderung der Temperatur zu Phasenverschiebungen der Lichtwellen. Wie gestrichelt angedeutet, wird der eine Strahl an den Grenzflächen des Prismas E durch Totalreflexion umgeleitet, so daß die Reflexion Oberflächeneffekten unterworfen ist. Diese Effekte können die Phase der Lichtwelle beeinflussen und eine Störung des Interferenzsignals hervorrufen. Eine solche Störung kann als scheinbarer Frequenzunterschied wirken.

Der Erfindung liegt die Aufgabe zugrunde, bei der Überlagerung zweier Lichtstrahlen, die unter einem Divergenzwinkel zur Interferenz gebracht werden, temperaturbedingte Phasenverschiebungen aufgrund unterschiedlicher Wegstrecken in der Überlagerungsvorrichtung sowie Störungen des Interferenzsignals durch Oberflächeneffekte zu vermeiden.

Die erfindungsgemäße Vorrichtung zur Überlagerung zweier Lichtstrahlen, die unter einem Divergenzwinkel zur Interferenz gelangen und an einem Beobachtungsort ein Interferenzstreifenmuster bilden, ist gekennzeichnet durch

- zwei an einer gemeinsamen inneren Verbindungsfläche miteinander verkitteter annähernd gleicher Prismenteile, die an der Basis, d. h. an der Lichtstrahleintrittsfläche, einen geringfügig unterschiedlichen Basiswinkel aufweisen,

- eine Teilbereiche der Verbindungsfläche bedeckende innere teildurchlässige Verspiegelung an wenigstens einem der Prismenteile, und durch

- eine reflektierende Teilbeschichtung an beiden Außenflächen der Prismenteile mit einer größeren Brechzahl als das innere Medium der Prismenteile, welche Teilbeschichtung die Bereiche der möglichen ersten Lichtauftreffpunkte der von festgelegten Lichteintrittspunkten an der Basis aus die Teilprismen durchsetzenden Lichtstrahlen abdeckt.

Insbesondere bei der Verwendung in einem Laser-Ringsresonator sind die beiden miteinander verkitteten Prismenteile basisseitig mit einem gemeinsamen Glassubstrat verkittet, das vorzugsweise aus dem gleichen Material besteht wie die Prismenteile, so daß sich innerhalb der gesamten Anordnung von Prismenteilen und Glassubstrat eine gut überschaubare, weitgehend verlustfreie Lichtstrahlführung gewährleisten läßt.

Die Erfindung und vorteilhafte Einzelheiten werden nachfolgend unter Bezug auf die Zeichnung anhand eines Ausführungsbeispiels näher erläutert. Es zeigen:

Fig. I den bereits erläuterten Prinzipaufbau eines bekannten Laser-Ringresonators mit vier Spiegeln und

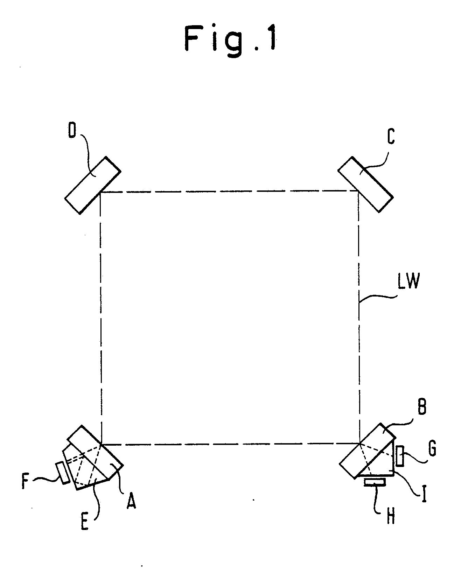

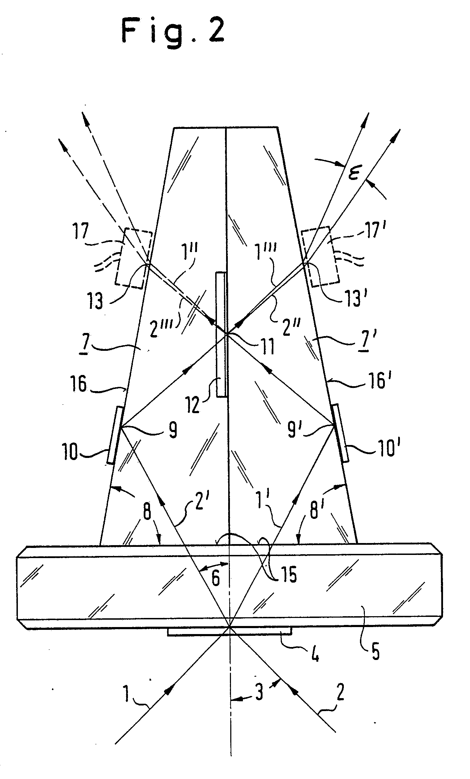

Fig. 2 ein Ausführungsbeispiel eines erfindungsgemäßen Überlagerungsprismas mit zwei spiegelbildlich annähernd gleichen Prismenteilen.

Bei der Verwendung in einem Laser-Ringresonator treffen, wie in Fig. 2 dargestellt, die beiden entgegengesetzt umlaufenden Lichtstrahlen I und 2

unter einem Winkel 3 zur Flächennormalen auf eine Spiegelschicht 4 eines Spiegels auf, an welchem eine Auskopplung vorgenommen werden soll. Die Spegelschicht 4 hat eine geringe Transmission, so daß ein Bruchteil der auftreffenden Lichtstrahlintensitäten in das Spiegelsubstrat 5 eindringt. In Abhängigkeit vom Brechungsindex des Materials des Substrats 5 werden beide Strahlen mit einem Winkel 6 zur Flächennormalen gebrochen.

Auf der der Spiegelschicht 4 abgekehrten Rückseite des Substrats 5 ist ein aus zwei spiegelbildlich ähnlichen (annähernd gleichen) Teilprismen 7 und 7' gebildetes Prisma so angebracht, daß die gemeinsame Basisfläche l5 an der Rückseite des Substrats 5 liegt. Besteht das Prisma 7, 7' aus dem gleichen Material wie das Spiegelsubstrat 5, so bleibt der Winkel 6 in den Teilprismen 7 und 7' für die Strahlen l' und 2' erhalten.

Wie dargestellt, besitzen die Teilprismen 7, 7' vorzugsweise, aber nicht notwendigerweise, die Schnittfläche eines rechtwinkligen Dreiecks mit abgeschnittener Spitze. Andere Ausführungsformen im ungenutzten Teil sind beliebig. So kann beispielsweise auch eine Abknickung der Außenflächen l6 und l6' zwischen den mit den Bezugszeichen 9 und l3 bzw. 9' und l3' markierten Stellen möglich, sofern diese Abknikkungen beide gleich groß sind.

Die Basiswinkel 8 und 8' der Prismenteile 7 und 7' liegen zweckmäßigerweise im Bereich von 70 bis 80°. Bei einem Unterschied der Basiswinkel 8 und 8' von l0 bis 20 Bogensekunden ergibt sich (wie später erläutert) ein Streifenabstand des Interferenzsignals von ca. 5 mm.

Die Strahlen l' und 2' treffen an den Stellen 9' und 9 auf die Außenflächen der Prismenteile 7' und 7. Im Bereich dieser Stellen sind die Außenflächen l6', l6 mit einer reflektierenden Beschichtung l0', l0 versehen, derart, daß keine Totalreflexion, sondern Reflexion am dichteren Medium auftritt. Dadurch werden Oberflächeneffekte, die zu einer Störung des Interferenzsignals führen können, an den Stellen 9 und 9' vermieden.

Nach der Reflexion am Ort 9 der reflektierenden Schicht l0 trifft der Strahl 2' am Ort ll auf eine teildurchlässige Verspiegelung l2, welche beispielsweise auf die gemeinnsame innere Verbindungsfläche der beiden Teilprismen 7 und 7' auf das Teilprisma 7 aufgebracht ist. Der Strahl 2' wird dadurch aufgeteilt in die Teilstrahlen 2" und 2'''. Entsprechendes geschieht mit dem Strahl l', der am Ort 9' durch die nicht totalreflektierende Beschichtung l0' eine Reflexion am dichteren Medium erfährt und an der teildurchlässigen Verspiegelung l2 ebenfalls aufgeteilt wird in die Teilstrahlen l" und l'''.

Sowohl zwischen den Strahlen l" und 2''' als

auch zwischen den Strahlen l''' und 2" existiert ein Divergenzwinkel, welcher doppelt so groß ist wie der Unterschied zwischen den Basiswinkeln 8 und 8'.

An den Stellen l3 und l3' treten die Strahlen l" und 2''' einerseits bzw. l''' und 2" aus den Prismenteilen 7 und 7' aus. Die Weglängen der Strahlen l', l", l''' und 2', 2", 2''' sind dadurch im wesentlichen gleich lang, so daß Phasenverschiebungen der Lichtwellen bei Temperaturänderungen gleichwirkend sind und damit zu keiner Verfälschung des Interferenzmusters bzw. der Meßwerte führen.

Der Divergenzwinkel in Luft beträgt

$$\epsilon = 2\,\delta\,n,$$

wobei mit n die Brechzahl (der Brechungsindex) des Prismenmaterials und mit $\delta$ der Unterschied der Basiswinkel 8 und 8' bezeichnet sind. Durch die Überlagerung der divergenten Lichtstrahlen nach dem Austritt aus den Prismenteilen 7, 7' im Bereich l3 bzw. l3' entstehen zwei Interferenzmuster jeweils mit einem Streifenabstand

$$y = \lambda/\epsilon,$$

wobei $\lambda$ die Wellenlänge des Lichts bezeichnet.

Zur Auswertung der Frequenzverschiebung bei einer Drehbewegung kann das Interferenzmuster im Bereich l3' in an sich bekannter Weise durch einen Photodetektor l7' abgetastet werden.

Wird dagegen das an der Stelle l3 aus dem anderen Teilprisma 7 austretende Interferenzmuster mit einem lichtempfindlichen Detektor erfaßt, welcher eine Fläche aufweist, die wenigstens über eine Periode das Interferenzmuster mittelt, so kann dieses Signal zur Messung der Summenintensität der beiden umlaufenden Lichtstrahlen benutzt werden. Diese Intensitätsinformation wird üblicherweise genutzt, um den Umfang des Lichtwegs im Ringresonator auf einen vorgegebenen Wert zu regeln. Eine gesonderte Anordnung zur Intensitätsmessung, wie bei dem bekannten Laser-Ringresonatoraufbau nach Fig. l am Spiegel B vorgesehen, ist durch die erfindungsgemäße Lichtstrahlüberlagerungsvorrichtung überflüssig geworden. Insbesondere braucht also kein weiterer Spiegel mit Teiltransmission ausgestattet zu werden, um eine weitere Auskopplung der Strahlen zu ermöglichen. Dadurch werden dem Ringresonator geringere Gesamtverluste zugefügt. Die Güte des gesamten Laser-Ringresonators wird also durch die Erfindung deutlich gesteigert.

Als Herstellungsmaterial für die Teilprismen 7 und 7' ist jedes optische Glas sowie auch Glaskeramiken, wie sie beispielsweise unter den Handelsbezeichnungen "Zerodur", "Cervit" oder "Crystron-Zero" vertrieben werden, geeignet. Beispielsweise beträgt der Brechungsindex von Zerodur für rotes Licht etwa n = 1,54.

Zur Verkittung der Teilprismen 7 und 7' sind optische Feinkitte geeignet, wie beispielsweise ein unter der Bezeichnung "Kanadabalsam" (Canada balm) bekannte Feinkitt oder auch vorhärtbare Epoxid-Feinkitte.

Die reflektierenden Beschichtungen 10 und 10' können beispielsweise Metallbeschichtungen sein, bestehen aus Silber oder Aluminium.

Die teildurchlässige Beschichtung 12 ist vorzugsweise ein 50 %-Strahlteiler, bestehend aus einer dünnen Metallschicht oder aus dielektrischen Mehrfachschichten, wie sie in der einschlägigen optischen Technik für derartige Strahlteiler bekannt sind und verwendet werden.

Für die Photodetektoren 17 und 17' werden vorzugsweise, aber nicht notwendigerweise, Silicium-PN-Dioden verwendet.

## Ansprüche

1. Vorrichtung zur Überlagerung zweier Lichtstrahlen, die unter einem Divergenzwinkel zur Interferenz gelangen und an einem Beobachtungsort (13, 13') ein Interferenzstreifenmuster bilden, **gekennzeichnet durch**
- zwei an einer gemeinsamen inneren Verbindungsfläche miteinander verkitteter Prismenteile (7, 7'), die an der Basis (15), d. h. an der Lichtstrahleintrittsfläche, einen geringfügig unterschiedlichen Basiswinkel (8 bzw. 8') aufweisen,
- eine Teilbereiche der Verbindungsfläche bedeckende innere lichtdurchlässige Verspiegelung (12) an wenigstens einem der Prismenteile (7) und durch
- eine reflektierende Teilbeschichtung (10, 10') an beiden Außenflächen der Prismenteile (7, 7') mit einer größeren Brechzahl (n) als das innere Medium der Prismenteile (7, 7'), welche Teilbeschichtung (12) die Bereiche der möglichen ersten Lichtauftreffpunkte (9, 9') der von festgelegten Lichteintrittspunkten an der Basis (15) aus die Prismenteile (7, 7') durchsetzenden Lichtstrahlen (1', 2') abdeckt.

2. Vorrichtung nach Anspruch 1, **dadurch gekennzeichnet**, daß die Prismenteile (7, 7') aus dem gleichen Glasmaterial bestehen.

3. Vorrichtung nach Anspruch 2, **dadurch gekennzeichnet**, daß die Basiswinkel (8 bzw. 8') im Bereich von 70 bis 80° liegen und sich voneinander um einen Differenzwinkel von 5 bis 30, vorzugsweise von 10 bis 20, Bogensekunden unterscheiden.

4. Vorrichtung nach Anspruch 3, **dadurch gekennzeichnet**, daß die miteinander verkitteten Prismenteile (7, 7') basis seitig mit einem gemeinsamen Glassubstrat (5) verkittet sind.

5. Vorrichtung nach Anspruch 4, **dadurch gekennzeichnet**, daß das Glassubstrat (5) aus dem gleichen Material besteht wie die Prismenteile (7, 7').

6. Vorrichtung nach Anspruch 4, **dadurch gekennzeichnet**, daß das Glassubstrat (5) auf der der Basis (15) abgekehrten Oberfläche mit einer teildurchlässigen Verspiegelung (4) versehen ist.

7. Laser-Ringresonator mit wenigstens drei Spiegeln, **dadurch gekennzeichnet**, daß der zur Auskopplung der beiden entgegengesetzt umlaufenden Lichtwellen dienende teildurchlässige Spiegel (4, 5) mit einer Vorrichtung zur Überlagerung zweier Lichtstrahlen gemäß einem der vorstehenden Ansprüche verbunden ist.

8. Laser-Ringresonator nach Anspruch 7, **dadurch gekennzeichnet**, daß auf der der inneren teildurchlässigen Verspiegelung (12) gegenüberliegenden Außenfläche (z. B. 16') des einen Teilprismas (7') ein erster Photodetektor (z. B. 17') zur Messung der relativen Frequenzänderung zwischen den beiden im Ringresonator entgegengesetzt umlaufenden Lichtwellen und auf der Außenfläche (z. B. 16) des anderen Teilprismas (7) ein zweiter Photodetektor (z. B. 17) zur Messung des Mittelwerts der Intensität des austretenden Interferenzmusters zur Bestimmung und Regelung der Lichtintensität im Ringresonator angeordnet sind.

# Fig.1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 582 429 (S.P. CALLAGHAN) * Spalte 2, Zeile 14 - Spalte 3, Zeile 55; Spalte 5, Zeilen 18-35; Ansprüche; Figuren * | 1 | G 02 B 27/14 G 01 C 19/64 |
| A | | 4-7 | |
| | --- | | |
| Y | US-A-3 484 169 (C.A. SKALSKI) * Spalte 7, Zeilen 3-40; Ansprüche; Figuren * | 1 | |
| A | | 2,3 | |
| | --- | | |
| A | DE-A-2 027 570 (C.G.E.) * Seite 5, Zeilen 1-5; Figur 1 * | 1 | |
| | --- | | |
| A | US-A-3 218 916 (J.B. SAUNDERS) * Spalte 2, Zeile 51 - Spalte 3, Zeile 72; Figuren 1-3 * | 1 | |
| | --- | | |
| A | US-A-4 329 055 (F.P. SCHAEFER) * Ansprüche; Figuren * | 1 | |
| | ----- | | |

**RECHERCHIERTE SACHGEBIETE (Int. Cl.4)**

G 02 B
G 01 C

Der vorliegende Recherchenbericht wurde für alle Patentansprüche erstellt

| Recherchenort | Abschlußdatum der Recherche | Prüfer |
|---|---|---|
| DEN HAAG | 21-03-1988 | PFAHLER R. |